# EUROPEAN PATENT APPLICATION

(11) **EP 3 177 030 A1**
(43) Date of publication of application: **07.06.2017**
(21) Application number: 16201788.3
(22) Date of filing: 01.12.2016
(51) Int. Cl.: H04Q 11/00

(54) **CONNECTION QUALIFIED LINK PASS THROUGH APPLICABLE TO MEDIA CONVERTERS**

(30) Priority: 01.12.2015 US 201514955477
(71) Applicant: Transition Networks, Inc., Minnetonka, Minnesota 55343 (US)
(72) Inventor: MULLIN, Jeffrey Doyle, Elk River, MN Minnesota 55330 (US); REVERING, Bill John, Anoka, MN Minnesota 55303 (US)
(74) Representative: Appleyard Lees IP LLP

(57) **Abstract**

The present invention provided and described herein are techniques for monitoring signal paths of a media converter and finding faults within those signal paths. For instance, techniques may include monitoring signal paths associated with a media converter to discover a path failure, wherein each of the paths can include a RX portion associated with a different physical transmission media, and a path failure is discovered when a signal expected to be received by one of the RX portions is absent. The techniques may also include, upon discovery of a path failure, providing an emulated signal over a signal path associated with the path failure and/or providing an emulated signal over a remainder of the paths, such that all the signal paths continue to communicate signals, and such that at least one of the RX portions of the paths is identified as associated with the path failure.

## Description

### BACKGROUND OF THE INVENTION

The present invention relates to path fault isolation associated with a media converter.

A media converter (such as a fiber media converter) is a networking device that makes it possible to connect two dissimilar media types, such as a twisted pair system with fiber optic cabling. For example, fiber media converters are important in interconnecting fiber optic cabling-based systems with existing copper-based cabling systems. Also, media converters (including fiber media converters) are also used for access to wide area networks (WAN) and metropolitan area networks (MAN). Media converters are also widely used by enterprise networking customers.

Media converters are very useful in today's networks; however, there are some unique problems pertaining to media converters that have yet to be solved. For example, during installations and maintenance, it is not always known if a combined media link is maintaining a communication path without an indication that the devices connected via the link are communicating with each other. For example, it is not known if a combined media link implemented by a fiber media converter is maintaining a communication path without an indication that at least a fiber-based network device and a copper-based network device of the link are communicating with each other.

Some media converters have parts that could be switched in and out to isolate and terminate use of a media type; thus the aforementioned problem can be resolved. Also, this can even be done independently and manually as not to affect other media types implemented through the converter. By isolating the media types manually, a signal path fault can be identified and isolated.

However, a problem with the last mentioned approach is that the installer of the equipment is often unaware of which signal path is causing the failing of a combined media link. Thus, determining the path fault can include painstaking trial and error. Additionally, media converters, at times, have to be sent back to the manufacturer to isolate the issue and determine the reason for the failed link. Therefore, a way to automate the function of path fault detection and isolation would greatly speed up installation and maintenance time and reduce the need for factory support.

The discussion above is merely provided for general background information and is not intended to be used as an aid in determining the scope of the claimed subject matter.

### SUMMARY

This Summary is provided to introduce a selection of concepts in a simplified form that are further described below in the Detailed Description. This Summary is not intended to identify key features or essential features of the claimed subject matter.

According to the present invention there is provided a method, a media converter, and a signal monitor for use with a media converter, as set forth in the appended claims. Preferred and/or possible features of the invention will be apparent from the dependent claims, and the description which follows.

Example embodiments may include methods for monitoring signal paths of a media converter and finding faults within those signal paths. For instance, in one aspect of the present invention, the methods may include monitoring, by signal monitor, signal paths associated with a media converter to discover a path failure in at least one of the signal paths, wherein each of the signal paths includes a receive (RX) portion associated with a different physical transmission media, and wherein a path failure is discovered when a RX signal expected to be received by one of the RX portions is absent. The methods may also include, upon discovery of a path failure by the signal monitor, providing an emulated signal over a signal path associated with the path failure and/or providing an emulated signal over a remainder of the signal paths, such that all the signal paths continue to communicate signals, such that the signal monitor can continue to monitor the remainder of the signal paths during the occurrence of the path failure, and such that at least one of the RX portions of the signal paths is identified as associated with the path failure.

The methods may also include providing an indication of the monitoring of the signal paths by the media converter. Also, the methods may include upon discovery of the path failure by the signal monitor, providing an indication of the path failure by the media converter.

Also, the methods may include monitoring the remainder of the signal paths during the occurrence of the path failure, and providing, by the media converter, an indication of the monitoring of the remainder of the signal paths during the occurrence of the path failure. For instance, upon discovery of a second path failure by the signal monitor, the methods can include providing a second emulated signal over a second communicative coupling associated with the second path failure, such that the signal monitor can continue to monitor a second remainder of the signal paths during the occurrence of the first and the second path failures and such that the first and the second path failures can be isolated for identification. Also, upon discovery of the second path failure by the signal monitor, the methods may include providing an indication of the second path failure by the media converter. Also, the methods can include monitoring the second remainder of the signal paths during the occurrence of the second path failure. Also, the methods can include providing, by the media converter, an indication of the monitoring of the second remainder of the signal paths during the occurrence of the second path failure.

The signal paths can include first and second signal paths. The first signal path can include: a first receiver communicatively coupled to conversion circuitry of the media converter, wherein the first receiver is configured to receive a signal communicable over a first physical transmission media; and a first transmitter communicatively coupled to the conversion circuitry, wherein the first transmitter is configured to transmit a signal communicable over a second physical transmission media. The second signal path can include: a second receiver communicatively coupled to the conversion circuitry, wherein the second receiver is configured to receive a signal communicable over the second physical transmission media; and a second transmitter communicatively coupled to the conversion circuitry, wherein the second transmitter is configured to transmit a signal communicable over the first physical transmission media.

In the examples with first and second signal paths, the methods can further include: the first receiver receiving a signal from the first physical transmission media; the conversion circuitry converting the received signal to a signal communicable over the second physical transmission media; and the first transmitter transmitting the converted signal to the second physical transmission media. Also, in such examples, the methods can include: the second receiver receiving a signal from the second physical transmission media; the conversion circuitry converting the received signal to a signal communicable over the first physical transmission media; and the second transmitter transmitting the converted signal to the first physical transmission media. Also, in such examples, each of the signal paths can be represented on the media converter by a corresponding light-emitting diode, and the methods can further include, upon discovery of a path failure by the signal monitor at one of the signal paths, providing an indication of the path failure at the corresponding light-emitting diode.

The methods can also include, prior to providing the emulated signal, determining that a signal emulator providing the emulated signal is enabled. In such an example, wherein the signal emulator is enabled, an emulated signal can be provided. Also, in this example, wherein the signal emulator is disabled, the emulated signal is not provided and the signal monitor automatically disables a respective receiver and a respective transmitter corresponding to the path failure. Also, wherein the respective receiver and the respective transmitter are disabled, such example methods can include communicating a link loss notification to an end-user device communicatively coupled to the media convertor.

Example embodiments may also include media converters capable of monitoring signal paths, and finding faults within those signal paths. Thus, in a further aspect of the present invention, the media converters can include conversion circuitry configured to convert a signal communicable over a first physical transmission media to a signal communicable over a second physical transmission media, and vice versa. The converters can also include a first signal path including: a first receiver communicatively coupled to the conversion circuitry, wherein the first receiver is configured to receive a signal communicable over a first physical transmission media; and a first transmitter communicatively coupled to the conversion circuitry, wherein the first transmitter is configured to transmit a signal communicable over a second physical transmission media. The converters can also include a second signal path including: a second receiver communicatively coupled to the conversion circuitry, wherein the second receiver is configured to receive a signal communicable over the second physical transmission media; and a second transmitter communicatively coupled to the conversion circuitry, wherein the second transmitter is configured to transmit a signal communicable over the first physical transmission media. The converters can also include a signal monitor configured to monitor the signal paths to discover a path failure in at least one of the signal paths, wherein a path failure is discovered when a signal expected to be received by one of the receivers is absent. The converters can also include a signal emulator configured to provide an emulated signal over at least one of the signal paths when a path failure in the at least one of the signal paths has been discovered by the signal monitor, such that all the signal paths continue to communicate signals, such that the signal monitor can continue to monitor a remainder of the signal paths during the occurrence of the path failure, and such that at least one of the receivers is identified as associated with the path failure.

Also, in some examples, statuses of each of the signal paths are indicated on the media converter by corresponding light-emitting diodes, and wherein upon discovery of a path failure by the signal monitor at one of the signal paths, the signal monitor can be further configured to provide an indication of the path failure at the light-emitting diode corresponding to the path failure. The signal monitor can also be configured, in some examples, to provide an indication of when it is monitoring the signal paths.

Also, in some examples, the media converters can include a user engageable switch configured to enable and disable the signal emulator, such that when the switch disables the signal emulator, the emulated signal is not provided upon discovery of a path failure and the signal monitor automatically disables a respective receiver and a respective transmitter corresponding to the path failure to prevent loss of data unknowingly transmitted over an invalid link.

Example embodiments may also signal monitors capable of monitoring signal paths of a media converter, and finding faults within those signal paths. Thus, in a yet further aspect of the present invention, the example signal monitors can include signal monitoring circuitry configured to discover a path failure in at least one of signal paths of the media converter when a receive (RX) signal expected to be received by a RX portion of the at least one of the signal paths is absent. The signal monitors can also include signal emulation circuitry configured to, upon discovery of a path failure by the signal monitoring circuitry, provide an emulated signal over a communicative coupling associated with the path failure and/or provide an emulated signal over at least one other communicative coupling associated with the media converter, such that the signal monitor can continue to monitor the at least one other communicative coupling associated with the media converter during the occurrence of the path failure, and such that the RX portion is identified as associated with the path failure.

Where applicable, features and embodiments of any aspects of the present invention, as described herein, may be regarded as features, embodiments, and/or preferred features/embodiments of the other aspects of the present invention.

### BRIEF DESCRIPTION OF DRAWINGS

The above and other features and advantages of the present invention will become more apparent by describing in detail exemplary embodiments thereof with reference to the attached drawings in which:
FIG. 1 is a block diagram illustrating an example network using multiple physical transmission medias, including media converters and network devices.
FIG. 2 is a block diagram illustrating an example media converter of the example network illustrated in FIG. 1.
FIG. 3 is a flow chart illustrating example operations performed by aspects of the example media converter illustrated in FIG. 2.
FIG. 4 is a block diagram illustrating another instance of the example media converter of the example network illustrated in FIG. 1. The example media converter illustrated in FIG. 4 shares many similar aspects with the media converter illustrated in FIG. 2.
FIG. 5 is a flow chart illustrating example operations performed by aspects of the example media converter illustrated in FIG. 4.
FIG. 6 is a block diagram illustrating an example computing device configurable in accordance with aspects of embodiments described herein.

The attached diagrammatic drawings will help to provide a better understanding of the invention.

### DESCRIPTION OF EMBODIMENTS

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "connected," "coupled" and variations thereof are used broadly and encompass both direct and indirect connections and couplings. Further, "connected" and "coupled" are not restricted to physical or mechanical connections or couplings.

Known media converters typically use a troubleshooting technique known as link pass through. Link pass through allows a media converter to monitor ports with different media connections for loss of a signal. For example, in the event of a loss of a receive (RX) signal at a RX port, the media converter can automatically disable a corresponding transmit (TX) signal for the counterpart TX port in the same signal path as the RX port. Thus, "passing through" the link loss. In such examples, a network device expecting a signal from the counterpart TX port is implicitly or explicitly notified of the link loss. This feature in known media converters prevents loss of data and invalid data transmissions over a faulty link. The problem with this approach is the end equipment often is merely capable of identifying that the link is not operational but is not always capable of indicating which part of the link path (e.g., TX versus RX) is at fault; thus making it difficult to troubleshoot the problem. The other shortcoming with the link pass through implementation is all of the equipment and physical transmission media have to be installed before it can be determined if the entire communication infrastructure is operational.

Described herein is a novel troubleshooting technique applicable to media converters, hereinafter referred to as qualified link pass through technique. With the qualified link pass through technique, each section of a communication infrastructure can be tested independently of the other sections. Also, the technique can determine which part of the link path (such as TX versus RX) is at fault. After all the individual signal paths and TX and RX portions of the paths in an infrastructure are determined to work, communications traffic can be permitted to pass from end to end of the media converters. Thus each signal path can be installed and tested at different times by different controlling entities with high confidence. For example, the qualified link pass through technique can provide a high confidence that the entire system will work when the final elements are installed and provisioned.

For example, the qualified link pass through technique includes a troubleshooting feature that allows the media converter to communicate with nodes in a network that are working in the event that one of the ports or signal paths associated with the converter becomes disabled. For example, the qualified link pass through technique can allow a fiber media converter to maintain communications with the elements that are still working in the event a copper or fiber connection has been disabled. This permits status indicators on the network devices and/or the media converter to identify which part of the network the signal path fault is located.

One of the advantages of the qualified link pass through technique is that when one link is inoperative, other links will maintain their operations so that during a time of troubleshooting it can become readily apparent which signal path or part of a signal path (such as a TX portion or RX portion) associated with a media converter is inoperative. Additionally, other advantages will become apparent with the following description of the drawings.

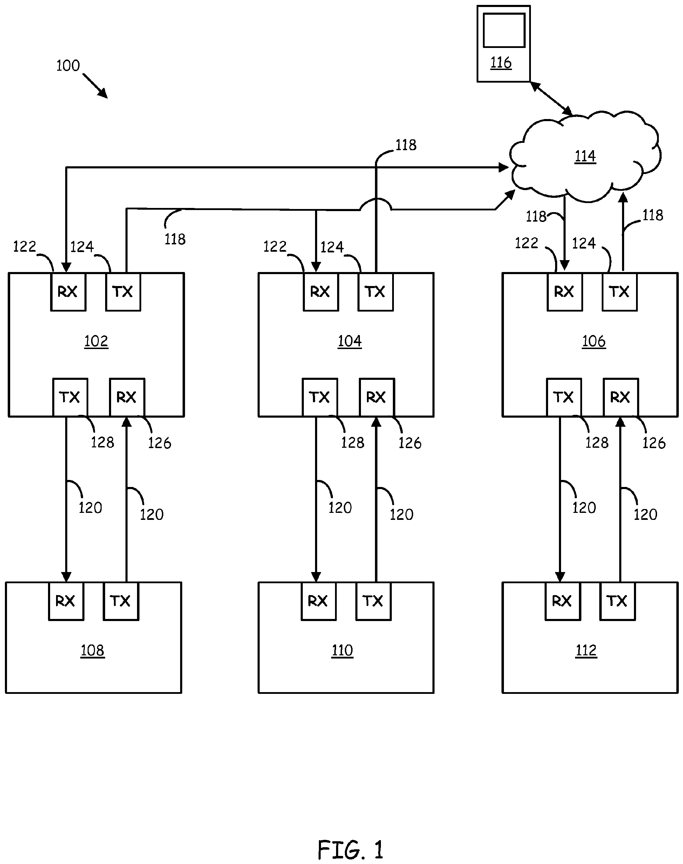

FIG. 1 is a block diagram illustrating an example network 100 using multiple physical transmission medias, corresponding media converters, and network devices. Depicted are media converters 102, 104, and 106, network devices 108, 110, and 112, a network 114 (such as a network including a wide-area and/or a local-area network), and a network administrator device 116. These aspects of the example network 100 are communicatively coupled via various types of physical transmission media. As depicted, the media converters 102, 104, and 106 are communicatively coupled to the network 114 by a first physical transmission media 118, and the media converters are communicatively coupled to the network devices 108, 110, and 112 by a second physical transmission media 120. In an example embodiment, the first physical transmission media 118 may include a fiber-optic based physical transmission media and the second physical transmission media 120 may include a copper based physical transmission media.

The media converters 102, 104, and 106 may include fiber media converters, such that the first physical transmission media 118 may include a fiber-optic based physical transmission media and the second physical transmission media 120 may include a copper based physical transmission media. Also, the converters 102, 104, and 106 may include various media converter types ranging from small standalone devices and PC card converters to high port-density chassis systems that offer advanced features for network management. The converters 102, 104, and 106 can support many different data communication protocols including Ethernet, Fast Ethernet, Gigabit Ethernet, digital transmission of multiplexed telephone calls such as T1/E1/J1, digital signal systems such as DS3/E3, as well as multiple cabling types such as coax, twisted pair, multi-mode, and single-mode fiber optics cabling. Transmission media 118 and 120 can be any transmission media types supporting these or other protocol.

The media converters 102, 104, and 106 may use Simple Network Management Protocol (SNMP) to enable proactive management of link status, monitoring chassis environmental statistics and sending traps to network managers in the event of a link break or loss, such as a fiber break on a fiber-optic line or link loss on the copper port, for example. The media converters 102, 104, and 106, in their connections to the network 114, can modify duplex and speed settings. The media converters 102, 104, and 106, can also include switching media converters that can connect different speed network segments. For example, existing half-duplex hubs can be connected to 100BASE-TX Fast Ethernet network segments over 100BASE-FX. To clarify, 100BASE-TX is a twisted-pair Fast Ethernet technology, and 100BASE-FX is a version of Fast Ethernet over optical fiber, and both of these technologies may be used with the systems described herein.

With respect to expanding the reach of a network (such as the network 100) to span over multiple geographic locations, the media converters 102, 104, and 106 are beneficial because in some embodiments local parts of a network usually rely on copper-based lines and wide-area parts usually rely on optical fiber lines. Such fiber lines are known to extend the reach of a network over great distances, such as from one city to another, and even one country to another is some instances.

Regarding fiber media converters, wavelength-division multiplexing (WDM) technology in a local area network is especially beneficial in situations where fiber is in limited supply or expensive to provision. Thus, converters, such as media converters 102, 104, and 106, can support such a technology. The media converters 102, 104, and 106 may also include conventional dual strand fiber converters, with separate receive and transmit ports. The media converters 102, 104, and 106 may also include single strand fiber converters. Other benefits of media conversion include providing a gradual migration path from copper to fiber. Fiber connections can greatly extend the reach and reduce electromagnetic interference, in comparison to copper links. Also, fiber media converters provide options for networks with switches not supporting fiber. In other words, legacy switches can use fiber media converters to connect to a fiber network.

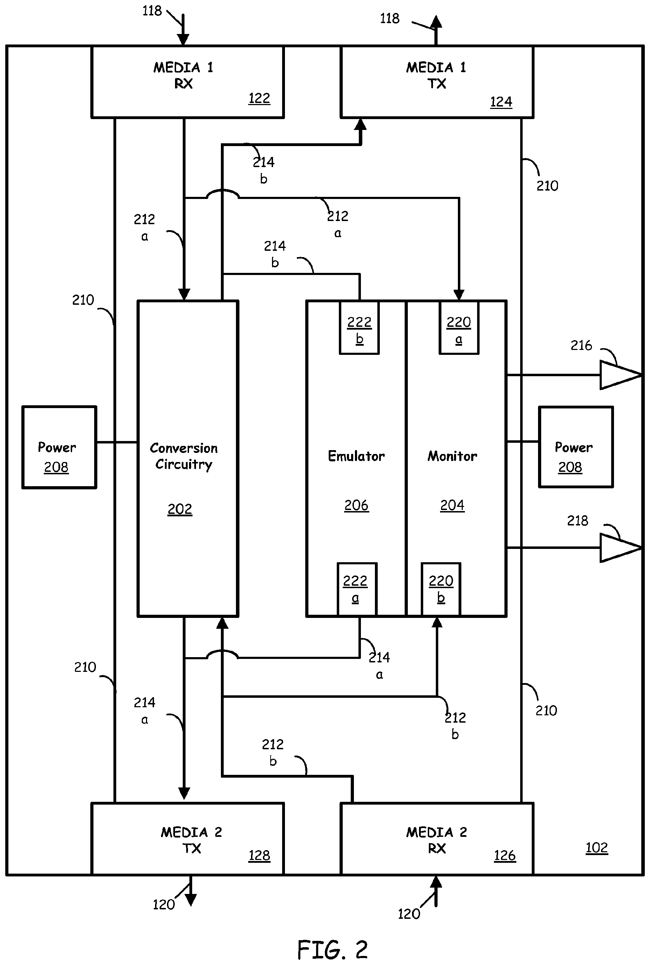

As shown in FIG. 1, the media converters 102, 104, and 106, each include four communications ports, including respective signal receive (RX) and signal transmit (TX) ports for the first physical transmission media 118 and the second physical transmission media 120. The media converter 102 includes a first physical transmission media RX port 122, a first physical transmission media TX port 124, a second physical transmission media RX port 126, and a second physical transmission media TX port 128. Also, the media converters 104 and 106 include similar ports. Each RX port is part of a respective RX portion of a media converter, and each TX port is part of a respective TX portion of the media converter. The RX/TX portions can also include communication lines corresponding to the RX/TX ports (such as input lines 212a and 212b and output lines 214a and 214b illustrated in FIG. 2). Furthermore, in some examples, the media converters 102, 104, and 106 are similar media converters with similar functionality.

Also depicted, the network devices 108, 110, and 112 have respective RX and TX ports operatively coupled with the second physical transmission media 120; and thus, coupled with the media converters 102, 104, and 106. The network devices 108, 110, and 112 may include any network device capable of communicating with a media converter, such as end-user devices, gateways, routers, network bridges, switches, hubs, repeaters, or any combination thereof.

FIG. 2 is a block diagram illustrating an example media converter of the example network illustrated in FIG. 1. Specifically, media converter 102 illustrated in FIG. 1 is depicted in detail. Media converter 102 includes the RX and TX ports 122-128 illustrated in FIG. 1, conversion circuitry 202, a signal monitor 204, a signal emulator 206, a power source 208, power supply lines 210, input lines 212a and 212b, output lines 214a and 214b, and status indicators 216 and 218 (which may include light-emitting diodes in some examples). Also depicted are RX ports 220a and 220b of the signal monitor (which can receive RX signals from the RX ports 122 and 126), and TX ports 222a and 222b of the signal emulator (which can transmit emulated TX signals to the TX signal ports 124 and 128).

As shown in FIG. 2, the conversion circuitry 202 is communicatively coupled to the RX and TX ports 122-128 by input lines 212a and 212b and/or output lines 214a and 214b. The conversion circuitry 202 is configured to convert a signal received by one of the RX Ports 122 or 126 from one media type signal to another. For example, the conversion circuitry 202 is configured to convert a signal communicable over the first physical transmission media (such as received from the RX Port 122) to a signal communicable over the second physical transmission media, and vice versa.

As shown, the conversion circuitry 202 converts signals along two signal paths that pass through the media convert 102. The first signal path includes a first receiver (such as the RX port 122) communicatively coupled to the conversion circuitry 202. The first receiver is configured to receive a signal communicable over the first physical transmission media 118. The first signal path also includes a first transmitter (such as the TX port 128) communicatively coupled to the conversion circuitry 202. The first transmitter is configured to transmit a signal communicable over the second physical transmission media 120. Also, the first signal path includes the input line 212a and the output line 214a. Statuses of the first signal path are provided by the status indicator 216.

The second signal path includes a second receiver (such as the RX port 126) communicatively coupled to the conversion circuitry 202. The second receiver is configured to receive a signal communicable over the second physical transmission media 120. The second signal path also includes a second transmitter (such as the TX port 124) communicatively coupled to the conversion circuitry 202. The second transmitter is configured to transmit a signal communicable over the first physical transmission media 118. Also, the second signal path includes the input line 212b and the output line 214b. Statuses of the second signal path are provided by the status indicator 218.

The signal monitor 204 is configured to monitor at least the two signal paths depicted in FIG. 2 to discover a path failure in at least one of the signal paths. A path failure can be discovered by the monitor 204 when an RX signal expected to be received by one of the RX portions of the media converter is absent. For example, path failures can be discovered by the signal monitor 204 when expected RX signals received by the RX ports 122 and/or 126 are absent. As shown, RX ports 220a and 220b receive signals monitored by the signal monitor 204. Also, as depicted, the RX port 220a is connected to the first signal path, and the RX port 220b is connected to the second signal path.

The signal monitor 204 may include or at least be communicatively coupled to the signal emulator 206. The signal emulator 206 is configured to emulate signals to transmit over at least the two signal paths depicted in FIG. 2 to emulate a scenario in which a path failure is not occurring in one of the signal paths. In other words, the signal emulator 206 can be configured to provide a signal over at least one of the signal paths when a path failure in the at least one of the signal paths has been discovered by the signal monitor 204. This last feature allows the signal monitor 204 to continue to monitor a remainder of the signal paths during the occurrence of the path failure. Also, this last feature allows for the signal monitor 204 to identify and isolate the path failure. For instance, upon discovery of a path failure by the signal monitor 204, the signal emulator 206 can provide an emulated signal over a signal path associated with the path failure and/or provide an emulated signal over a remainder of the signal paths. This allows for all the signal paths to continue to communicate signals, which consequently allows the signal monitor 204 to continue to monitor the remainder of the signal paths during the occurrence of the path failure. Also, this last feature allows at least one of the RX portions of the signal paths to be identified as associated with the path failure.

In some examples, the emulated signal may have certain information indicating the signal is a valid emulated signal meant to substitute for an actual valid signal. In other examples, the emulated signal may merely meet a certain energy threshold typical of the media type such that the signal can be communicated from at least the signal emulator 206, starting at least at TX port 222a or 222b, to one of the TX ports 124 or 128. For instance, in examples of the media converter 102 with an external copper line receiving the emulated TX signal, the emulated signal transmitted to the copper line may have an energy level necessary to travel along at least the entire copper line to at least the next node in the network. Also, such a signal may have information indicating that it is an emulated signal for emulating valid operation of the copper line.

Also, as depicted, the TX port 222a is connected to the first signal path, and the TX port 222b is connected to the second signal path.

Statuses of each of the signal paths that pass through the media converter 102 may be indicated on the media converter by the status indicators 216 and 218. For example, upon discovery of a path failure by the signal monitor 204 at one of the signal paths, the monitor can provide an indication of the path failure at the status indicator corresponding to the path failure. Also, the signal monitor can provide an indication of when it is monitoring the signal paths, whether or not there is a path failure. In an example where the status indicators 216 and 218 are light-emitting diodes, a flashing emission by one of the diodes can represent that the signal path is being monitored, and a constant emission without a flashing pattern can represent that the signal path has failed and is possibly being emulated by the signal emulator 206.

As shown in FIG. 2, the media converter 102 includes the power source 208, such as a battery pack, a transformer, a power supply, or the like. The power source 208 provides power for computations, communications, and so forth by the media converter 102, such as via the power supply lines 210.

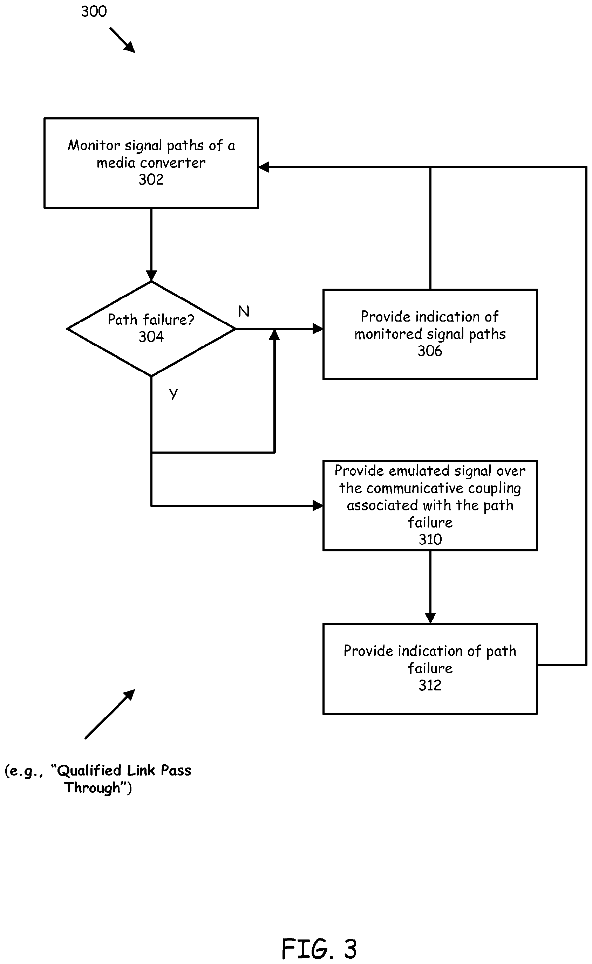

FIG. 3 is a flow chart illustrating example operations 300 performed by aspects of the example media converter 102 illustrated in FIG. 2. The operations 300 include, at 302, monitoring, such as by the signal monitor 204, signal paths associated with the media converter 102 to discover a path failure in at least one of the signal paths. Parts of the signal paths monitored may include the input lines 212a and 212b and/or the RX ports 122 and 126. In other examples, output lines 214a and 214b may be monitored as well, as a verification of normal operations of the signal path. At 304, the signal monitor determines if a failure in one of the signal paths has occurred.

The operations 300 further include providing an indication of the monitoring of the signal paths by the media converter, at 306. As depicted in FIG. 3, providing an indication of the monitoring of the signal paths occurs whether or not a signal path failure as been discovered by the signal monitor at 304.

Upon discovery of a path failure (at 304), such as by the signal monitor 204, the media converter 102 can provide an emulated signal over the signal path associated with the path failure and/or any or all of the remaining signal paths that have not been discovered as failing, at 310. For instance, all the signal paths associated with the media converter may continue to communicate signals. This last operation can allow the signal monitor to continue to monitor a remainder of the signal paths at 302, during the occurrence of the path failure. Also, this last operation allows for isolation of the path failure (such as by the monitor), so that the path failure can be isolated for identification at 312. For instance, at least one of the RX portions of the signal paths can be identified as associated with the path failure due to the aforementioned functionality. The emulated signal in such an instance may be provided by the signal emulator 206.

Further, upon discovery of the path failure (at 304) by the signal monitor, the media converter 102 can provide an indication of the path failure at 312. As mentioned, the converter can continue to monitor the remainder of the signal paths at 302 during the occurrence of the path failure and provide an indication of the monitoring of the remainder of the signal paths at 306 during the occurrence of the path failure. Also, the media converter 102 can provide an indication of the occurrence of the path failure at 312.

As shown by FIG. 3, the operations 300 can support the qualified link pass through technique and can be repeated until all signal paths of a system including the media converter 102 appear to be operational or are in fact operational. For example, all signal paths can appear to be operational after a selected sampling of testing the signal paths in a system. All the signal paths are known to be operational, when the operations of FIG. 3 are repeated until every signal path is confirmed as operating correctly at least from a physical layer perspective, such as from a perspective of the physical layer of the Open Systems Interconnection (OSI) model. Also, in some embodiments, it is possible to also confirm valid operations of signal paths from higher levels of network configurations, such as confirming valid operations from a data link layer or network layer perspective of the OSI model.

In a case where signal paths of one or more media converters are being check, such as the validation of the media converters 102, 104, and/or 106, upon discovery of a second path failure by a respective signal monitor, the media converter can provide a second emulated signal over a second communicative coupling associated with the second path failure. As mentioned, this last operation allows for that signal monitor continue to monitor a second remainder of the signal paths during the occurrence of the first and the second path failures and such that the first and the second path failures can be isolated for identification. For instance, where the first media converter only checks two signal paths, the second remainder of paths could include paths corresponding to other media converters in the system, such as media converters 104 and 106.

Further, with the last mentioned examples in mind, upon discovery of the second path failure by a signal monitor, the monitor can provide an indication of the second path failure by the media converter at 312 as well. Likewise, a signal monitor can continue monitoring the second remainder of the signal paths during the occurrence of the second path failure, at 302. Also, the media converter can further provide an indication of the monitoring of the second remainder of the signal paths during the occurrence of the second path failure, at 306.

In these aforementioned example steps, each of the checked signal paths can be represented on the media converter by a corresponding light-emitting diode. For instance, the operations 300 can include, upon discovery of a path failure by the signal monitor at one of the signal paths, the media converter providing an indication of the path failure at a corresponding light-emitting diode (at 312). Also, the diodes can provide the other indications occurring in the operations 300, such as the monitoring of signal paths at 306.

As mentioned herein, the signal paths monitored with the operations 300 can include a first signal path including a first receiver communicatively coupled to conversion circuitry of the media converter (wherein the first receiver is configured to receive a signal communicable over a first physical transmission media) and a first transmitter communicatively coupled to the conversion circuitry (wherein the first transmitter is configured to transmit a signal communicable over a second physical transmission media). Also, the monitored paths can include a second signal path including a second receiver communicatively coupled to the conversion circuitry (wherein the second receiver is configured to receive a signal communicable over the second physical transmission media) and a second transmitter communicatively coupled to the conversion circuitry (wherein the second transmitter is configured to transmit a signal communicable over the first physical transmission media).

Also, with respect to FIG. 3 (although not depicted), the first receiver can receive a signal from the first physical transmission media. The conversion circuitry can convert the received signal to a signal communicable over the second physical transmission media, and consequently, the first transmitter can transmit the converted signal to the second physical transmission media. Also, the second receiver can receive a signal from the second physical transmission media. The conversion circuitry can convert the received signal to a signal communicable over the first physical transmission media, and consequently, the second transmitter can transmit the converted signal to the first physical transmission media.

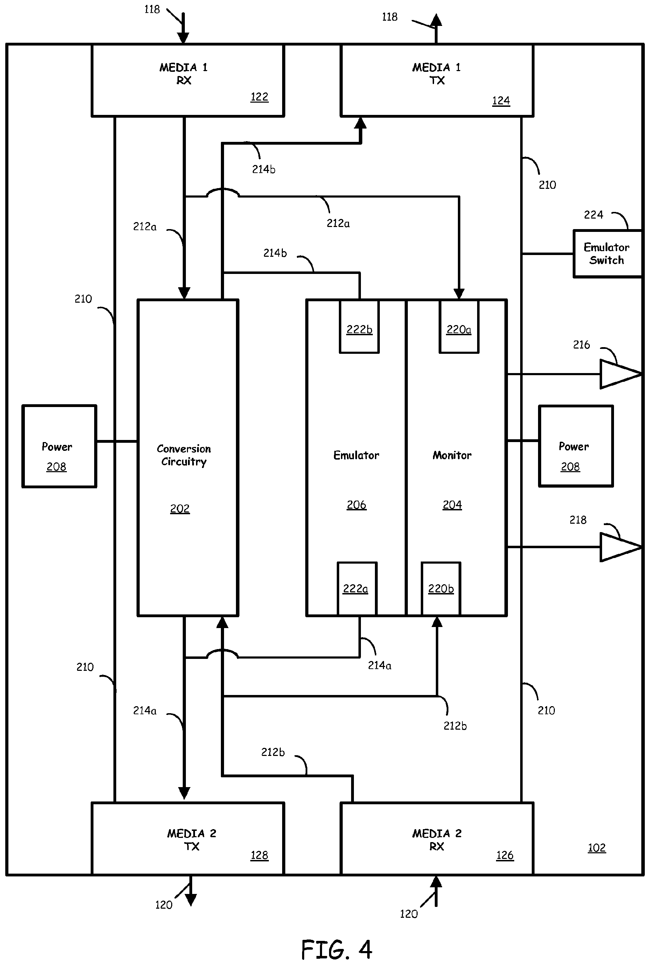

FIG. 4 is a block diagram illustrating another instance of the example media converter 102 of the example network illustrated in FIG. 1. The example media converter 102 illustrated in FIG. 4 shares many similar aspects with the media converter 102 illustrated in FIG. 2. Additionally, the media converter 102 depicted in FIG. 4 includes a user engageable switch 224 configured to enable and disable the signal emulator 206. By disabling the signal emulator 206, the emulated signal can no longer be provided upon discovery of a path failure. Consequently, in some examples of the media converter 102, the signal monitor 204 automatically disables a respective receiver and a respective transmitter corresponding to the path failure to prevent loss of data unknowingly transmitted over an invalid link.

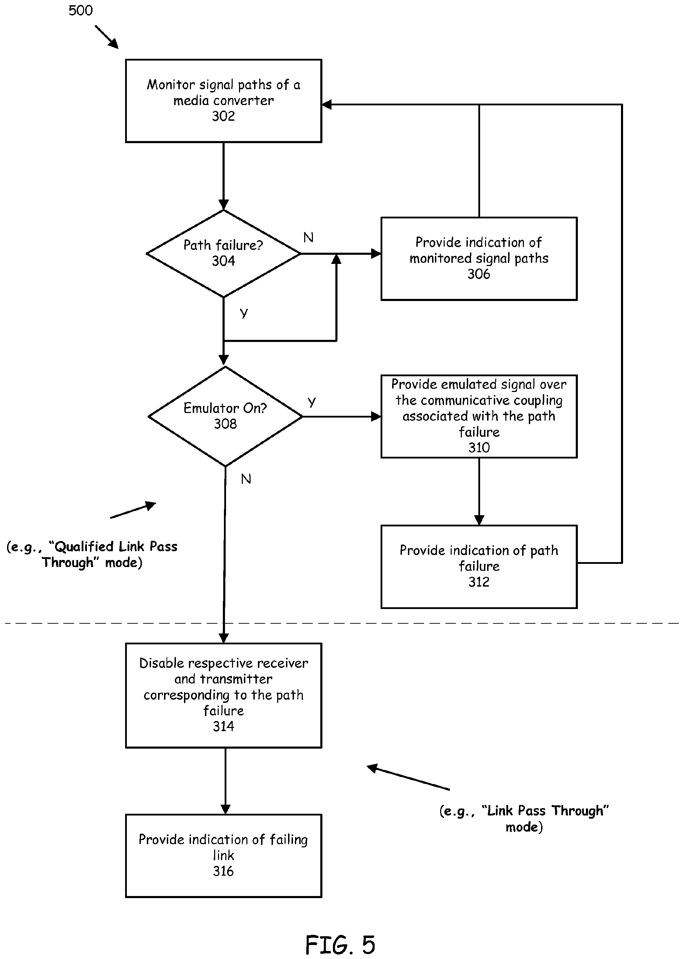

FIG. 5 is a flow chart illustrating example operations 500 performed by aspects of the example media converter illustrated in FIG. 4. The example operations 500 illustrated in FIG. 5 for the most part include in the operations 300 illustrated in FIG. 3. Additionally, relative to the operations 300, the operations 500 include: prior to providing the emulated signal at 310, the monitor 204 determines whether or not the signal emulator 206 is enabled at 308. Wherein the signal emulator 206 is enabled, the emulated signal is provided at 310. Wherein the signal emulator 206 is disabled, the emulated signal is not provided and the monitor automatically disables a respective receiver and a respective transmitter corresponding to the path failure at 314. In such an instance, wherein the respective receiver and the respective transmitter of a signal path failure are disabled, the operations 500 can further include the media converter communicating a link loss notification to a network device communicatively coupled to the media convertor (such as an end-user device) at 316. For example, wherein the respective receiver and the respective transmitter of a signal path failure are disabled, the operations 500 can include the media converter communicating a link loss notification to a computer of a network administrator, such as the network administrator device 116.

As shown by FIG. 5, the operations 500 can support the qualified link pass through technique and link pass through. Also, the steps of operations 500 that are associated with the qualified link pass through technique (i.e., operations 302, 304, 306, 310, and 312) can be repeated until all signal paths of a system appear to be operational or are in fact operational. The operations 314 and 316, which are associated with link pass through, are only repeatable per media converter; whereas the operations associated with the qualified link pass through technique are be repeatable to per signal path. Thus, the qualified link pass through technique's operations can provide a much more detailed perspective of operating links in a network with multiple physical signal transmission mediums.

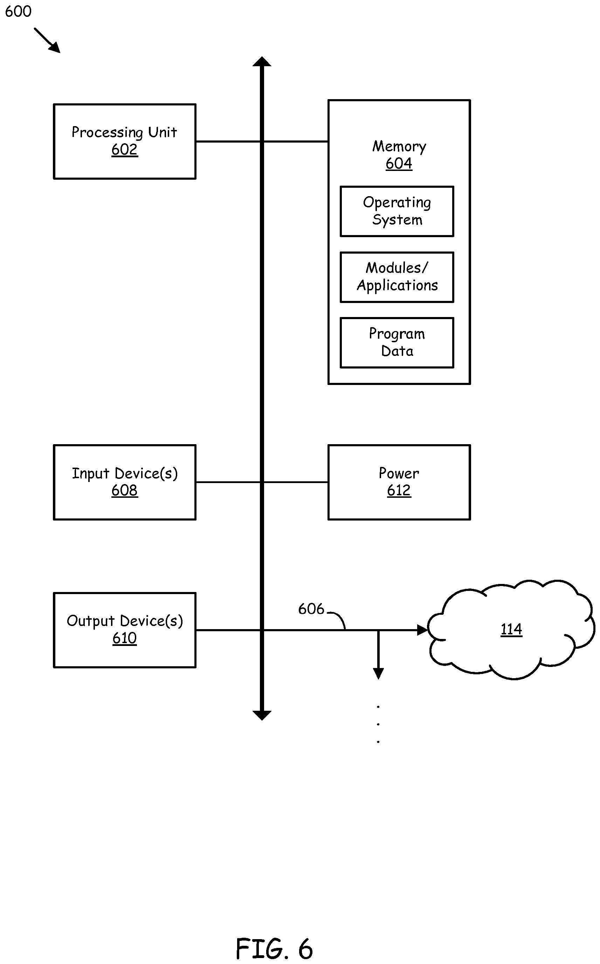

FIG. 6 is a block diagram illustrating an example computing device 600 configurable in accordance with aspects of embodiments described herein. The signal monitor 204, as well as other devices described herein that may include a computing device (such as the network administrator device 116 or anyone of the network devices 108, 110, or 112) can include a variation of the computing device 600. The computing device 600 includes a processing unit 602 and a memory 604. Depending on the exact configuration and type of computing device, the memory 604 may be volatile (such as RAM), non-volatile (such as ROM, flash memory, etc.) or some combination of the two. Additionally, the device 600 may also have additional features and functionality. For example, the device 600 may also include additional storage (removable and/or non-removable) including, magnetic or optical disks or tapes, USB flash drives, memory cards, etc. Computer storage media includes volatile and nonvolatile, removable and non-removable media implemented in any method or technology for storage of information such as computer readable instructions, data structures, program modules or other data. Almost any computer storage media may be part of the device 600.

Regarding the operations and acts associated with the signal monitor 204 and other possible computing devices described herein, such operations and acts are described with reference to acts and symbolic representations of operations that are performed by one or more devices, unless indicated otherwise. As such, it will be understood that such acts and operations, which are at times referred to as being computer-executed, include the manipulation by the processing unit of the device of electrical signals representing data in a structured form. This manipulation transforms the data or maintains it at locations in the memory system of the device, which reconfigures or otherwise alters the operation of the device in a manner well understood by those skilled in the art. The data structures where data is maintained are physical locations of the memory that have particular properties defined by the format of the data. However, while the invention is being described in the foregoing context, it is not meant to be limiting as those of skill in the art will appreciate that various of the acts and operation described hereinafter may also be implemented in specific hardware such as an application-specific integrated circuit (ASIC).

The memory 604 may include operating system, one or more programming modules or applications, and program data. Operating system, for example, may be suitable for controlling computing device 600's operation. While executing on processing unit 602, programming modules or applications may perform processes including, for example, one or more operations described herein.

Generally, consistent with disclosed aspects of embodiments, program modules or applications may include routines, programs, components, data structures, and other types of structures that may perform particular tasks or that may implement particular abstract data types. Moreover, disclosed aspects of embodiments may be practiced with other computer system configurations, including multiprocessor systems, microprocessor-based or programmable consumer electronics, minicomputers, mainframe computers, ASICs, and the like. Disclosed aspects of embodiments may also be practiced in distributed computing environments where tasks are performed by remote processing devices (such as the network administrator device 116) that are linked through a communications network (such as the network 114). In a distributed computing environment, program modules may be located in both local and remote memory storage devices.

Furthermore, some disclosed aspects of embodiments may be practiced in an electrical circuit including discrete electronic elements, packaged or integrated electronic chips containing logic gates, a circuit utilizing a microprocessor, or on a single chip containing electronic elements or microprocessors. Some disclosed aspects of embodiments may also be practiced using other technologies capable of performing logical operations such as, for example, AND, OR, and NOT, including but not limited to mechanical, optical, fluidic, and quantum technologies. In addition, some disclosed aspects of embodiments may be practiced within a general purpose computer or in any other circuits or systems.

Disclosed aspects of the system, for example, may be implemented as a computer process (method), a computing system, or as an article of manufacture, such as a computer program product or computer readable media. The computer program product may be a computer storage media readable by a computer system and encoding a computer program of instructions for executing a computer process. Accordingly, some disclosed aspects of embodiments may be embodied in hardware and/or in software (including firmware, resident software, micro-code, etc.). In other words, some disclosed aspects of embodiments may take the form of a computer program product on a computer-usable or computer-readable storage medium having computer-usable or computer-readable program code embodied in the medium for use by or in connection with an instruction execution system. A computer-usable or computer-readable medium may be any non-transitory medium that can contain, store, communicate, propagate, or transport the program for use by or in connection with the instruction execution system, apparatus, or device.

The device 600 may also contain one or more communications connections 606 that allow the device to communicate with other devices. The communications connections 606 can include, for example, wired media connections such as a wired network or direct-wired connection, and wireless media connections such as acoustic, RF, infrared and other wireless media connections. In some aspects of embodiments, communications connections 606 are configured to provide communication between device 600 and a management system computing device (such as the network administrator device 116 over the network 114-which may be the Internet). Connection to the computer network can include wireless communication, cellular data communication, and/or any other type of connection.

In aspects of embodiments the computing device 600 has, or can be coupled to, a display device which provides a GUI (such as touch based GUI). The device 600 may also have, or be coupled to, one or more input devices 608, such as a keyboard, mouse, pen, voice input device, etc., for providing other input to the computing device. Further, display device, input devices 608 and output devices 610 can all be considered to be separate from, or alternatively part of, the computing device 600. Display device (which may be one of the output devices 610), input devices 608, and output devices 610 are also not required in all aspects of embodiments.

Computing device 600 can be provided with a portable or non-portable power source 612, such as a battery pack, a transformer, a power supply, or the like. The power source 612 provides power for computations, communications and so forth by the device 600.

Although the present invention has been described with reference to preferred embodiments, workers skilled in the art will recognize that changes may be made in form and detail without departing from the spirit and scope of the invention.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method, comprising:
monitoring, by signal monitor, signal paths associated with a media converter to discover a path failure in at least one of the signal paths, wherein each of the signal paths includes a receive (RX) portion associated with a different physical transmission media, and wherein a path failure is discovered when a RX signal expected to be received by one of the RX portions is absent;
upon discovery of a path failure by the signal monitor, providing an emulated signal over a signal path associated with the path failure or providing an emulated signal over a remainder of the signal paths, such that all the signal paths continue to communicate signals, such that the signal monitor can continue to monitor the remainder of the signal paths during the occurrence of the path failure, and such that at least one of the RX portions of the signal paths is identified as associated with the path failure.

2. The method of claim 1, further comprising monitoring the remainder of the signal paths during the occurrence of the path failure.

3. The method of either of claims 1 and 2, further comprising providing, by the media converter, an indication of the monitoring of the remainder of the signal paths during the occurrence of the path failure.

4. The method of any proceeding claim, further comprising, upon discovery of a second path failure by the signal monitor, providing a second emulated signal over a second communicative coupling associated with the second path failure, such that the signal monitor can continue to monitor a second remainder of the signal paths during the occurrence of the first and the second path failures and such that the first and the second path failures can be isolated for identification.

5. The method of claim 1, wherein the signal paths include:
a first signal path including:
a first receiver communicatively coupled to conversion circuitry of the media converter, wherein the first receiver is configured to receive a signal communicable over a first physical transmission media; and
a first transmitter communicatively coupled to the conversion circuitry, wherein the first transmitter is configured to transmit a signal communicable over a second physical transmission media; and
a second signal path including:
a second receiver communicatively coupled to the conversion circuitry, wherein the second receiver is configured to receive a signal communicable over the second physical transmission media; and
a second transmitter communicatively coupled to the conversion circuitry, wherein the second transmitter is configured to transmit a signal communicable over the first physical transmission media.

6. The method of any proceeding claim, further comprising providing an indication of the monitoring of the signal paths by the media converter.

7. The method of any proceeding claim, further comprising, upon discovery of the path failure by the signal monitor, providing an indication of the path failure by the media converter.

8. The method of any of claims 5 to 7, further comprising:
the first receiver receiving a signal from the first physical transmission media;
the conversion circuitry converting the received signal to a signal communicable over the second physical transmission media; and
the first transmitter transmitting the converted signal to the second physical transmission media.

9. The method of any of claims 5 to 8, further comprising:
the second receiver receiving a signal from the second physical transmission media;
the conversion circuitry converting the received signal to a signal communicable over the first physical transmission media; and
the second transmitter transmitting the converted signal to the first physical transmission media.

10. The method of any of claims 5 to 9, wherein each of the signal paths is represented on the media converter by a corresponding light-emitting diode, and wherein the method further comprises, upon discovery of a path failure by the signal monitor at one of the signal paths, providing an indication of the path failure at the corresponding light-emitting diode.

11. The method of any proceeding claim, further comprising:
prior to providing the emulated signal, determining that a signal emulator providing the emulated signal is enabled,
wherein the signal emulator is enabled, the emulated signal is provided, and
wherein the signal emulator is disabled, the emulated signal is not provided and the signal monitor automatically disables a respective receiver and a respective transmitter corresponding to the path failure.

12. The method of claim 11, wherein the respective receiver and the respective transmitter are disabled, further comprising communicating a link loss notification to an end-user device communicatively coupled to the media convertor.

13. A media converter, comprising:
conversion circuitry configured to convert a signal communicable over a first physical transmission media to a signal communicable over a second physical transmission media, and vice versa;
a first signal path including:
a first receiver communicatively coupled to the conversion circuitry, wherein the first receiver is configured to receive a signal communicable over a first physical transmission media; and
a first transmitter communicatively coupled to the conversion circuitry, wherein the first transmitter is configured to transmit a signal communicable over a second physical transmission media; and
a second signal path including:
a second receiver communicatively coupled to the conversion circuitry, wherein the second receiver is configured to receive a signal communicable over the second physical transmission media; and
a second transmitter communicatively coupled to the conversion circuitry, wherein the second transmitter is configured to transmit a signal communicable over the first physical transmission media;
a signal monitor configured to monitor the signal paths to discover a path failure in at least one of the signal paths, wherein a path failure is discovered when a signal expected to be received by one of the receivers is absent; and
a signal emulator configured to provide an emulated signal over at least one of the signal paths when a path failure in the at least one of the signal paths has been discovered by the signal monitor, such that all the signal paths continue to communicate signals, such that the signal monitor can continue to monitor a remainder of the signal paths during the occurrence of the path failure, and such that at least one of the receivers is identified as associated with the path failure.

14. The media converter of claim 13, further comprising a user engageable switch configured to enable and disable the signal emulator, such that when the switch disables the signal emulator, the emulated signal is not provided upon discovery of a path failure and the signal monitor automatically disables a respective receiver and a respective transmitter corresponding to the path failure to prevent loss of data unknowingly transmitted over an invalid link.

15. A signal monitor for use with a media converter, comprising:
signal monitoring circuitry configured to discover a path failure in at least one of signal paths of the media converter when a receive (RX) signal expected to be received by a RX portion of the at least one of the signal paths is absent; and
signal emulation circuitry configured to, upon discovery of a path failure by the signal monitoring circuitry, provide an emulated signal over a communicative coupling associated with the path failure or provide an emulated signal over at least one other communicative coupling associated with the media converter, such that the signal monitor can continue to monitor the at least one other communicative coupling associated with the media converter during the occurrence of the path failure, and such that the RX portion is identified as associated with the path failure.
